(19) **Europäisches Patentamt**
**European Patent Office**
**Office européen des brevets**

(11) **EP 3 458 234 B1**

(12) **FASCICULE DE BREVET EUROPEEN**

(45) Date de publication et mention
de la délivrance du brevet:
**17.11.2021 Bulletin 2021/46**

(51) Int Cl.:
**B25J 9/16** (2006.01)    **A61H 3/00** (2006.01)
**B25J 9/00** (2006.01)

(21) Numéro de dépôt: **17734356.3**

(86) Numéro de dépôt international:
**PCT/EP2017/066696**

(22) Date de dépôt: **04.07.2017**

(87) Numéro de publication internationale:
**WO 2018/007414 (11.01.2018 Gazette 2018/02)**

(54) **EXOSQUELETTE AMBULATOIRE - PROCÉDÉ DE COMMANDE D'UN EXOSQUELETTE AMBULATOIRE**

GEHFÄHIGES EXOSKELETT - VERFAHREN ZUR STEUERUNG EINES GEHFÄHIGEN EXOSKELETTS

AMBULATORY EXOSKELETON - METHOD FOR CONTROLLING AN AMBULATORY EXOSKELETON

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.07.2016 FR 1656377**

(43) Date de publication de la demande:
**27.03.2019 Bulletin 2019/13**

(73) Titulaire: **Commissariat à l'Énergie Atomique et aux Énergies Alternatives
75015 Paris (FR)**

(72) Inventeurs:
• **GARREC, Philippe**
  **91190 Gif-sur-Yvette (FR)**
• **GEFFARD, Franck**
  **91400 Orsay (FR)**

(74) Mandataire: **Prouvez, Julien et al
Cabinet Boettcher
16, rue Médéric
75017 Paris (FR)**

(56) Documents cités:
**US-A1- 2009 210 093    US-A1- 2010 256 537**

**Description**

DOMAINE DE L'INVENTION

La présente invention concerne le domaine des exosquelettes d'assistance et plus particulièrement la commande des membres inférieurs d'un tel exosquelette.

ARRIERE PLAN DE L'INVENTION

Un exosquelette d'assistance est une structure mécanique qui double au moins partiellement celle du squelette humain et améliore ou supplée ses capacités physiques. Un exosquelette est dit ambulatoire lorsqu'il permet à son utilisateur de marcher avec celui-ci. Un exosquelette ambulatoire comprend généralement un élément de bassin lié au corps d'un utilisateur et sur lequel sont articulés deux membres inférieurs s'étendant parallèlement aux membres inférieurs de l'utilisateur. Chaque membre inférieur de l'exosquelette comprend un segment de cuisse auquel est articulé un segment de jambe, un pied étant articulé à l'extrémité du segment de jambe. Le contrôle complet de chaque membre inférieur nécessite généralement un premier actionneur pour commander l'articulation de hanche entre le segment de cuisse et l'élément de bassin, un deuxième actionneur pour contrôler l'articulation de genou entre le segment de cuisse et le segment de jambe, et un troisième actionneur pour contrôler l'articulation de cheville entre le segment de jambe et le pied. Chaque segment est relié au membre de l'utilisateur le long duquel il s'étend. Une unité de traitement ainsi qu'une alimentation en énergie, généralement portées par l'utilisateur et/ou l'élément de bassin, commande les différents actionneurs de l'exosquelette de manière à en maintenir l'équilibre.

Généralement, la masse de la charge appliquée à l'exosquelette (utilisateur + charge utile) est préalablement renseignée dans l'unité de traitement. Celle-ci peut cependant être mesurée par l'exosquelette lui-même. Il est fréquent d'ajouter un paramètre supplémentaire, appelé défaut d'assistance, de manière à conserver à l'utilisateur un ressenti partiel des forces qui s'exercent sur l'exosquelette. L'unité de traitement évalue en temps réel les positions relatives du segment de cuisse, du segment de jambe et du pied au moyen de codeurs rotatifs liés aux actionneurs des articulations. Elle détermine alors les couples d'équilibrage à appliquer sur chaque articulation par les actionneurs pour maintenir l'ensemble (utilisateur + exosquelette + charge utile) en équilibre. L'unité de traitement commande alors les actionneurs afin qu'ils appliquent les couples d'équilibrage calculés.

Lorsque l'utilisateur souhaite changer de posture, il exerce un effort à l'encontre des couples d'équilibrage appliqués aux articulations par les actionneurs et l'unité de traitement met à jour les nouveaux couples d'équilibrage à appliquer pour maintenir l'équilibre de l'ensemble (utilisateur + exosquelette + charge utile).

Les procédés de commande connus basés sur un équilibre statique de l'exosquelette offrent de bonnes performances pour les passages lents depuis une première position d'équilibre statique vers une deuxième position d'équilibre statique. Cependant un tel procédé se révèle particulièrement inadapté à la marche. En effet, la marche comprend une alternance de situations bipodes (appui sur deux jambes) et unipodes (appui sur une jambe) en équilibre dynamique. Les procédés connus déterminent à chaque changement de situation un ensemble de couples d'équilibrage plaçant l'ensemble (exosquelette + utilisateur + charge utile) en équilibre statique. La marche étant une succession de situations de déséquilibre dans lesquelles le corps est penché en avant, les procédés connus ne permettent pas un déplacement naturel de l'utilisateur revêtu d'un exosquelette ainsi commandé. L'utilisateur perçoit alors une résistance de la part de l'exosquelette au cours du mouvement. Cette résistance ressentie, en plus de créer un sentiment d'insécurité, peut s'avérer dangereuse en cas de mouvement réflexe rapide, comme par exemple dans le cas d'un rééquilibrage suite à glissement ou lorsque l'utilisateur trébuche. Un tel comportement de l'exosquelette est un frein à la diffusion de ce type de matériel.

Il a été envisagé de mesurer les forces et moments s'appliquant sur l'exosquelette à l'aide de capteurs de force à six axes et/ou d'accéléromètres et d'intégrer ces données dans un calcul dynamique des couples d'équilibrage à appliquer. De tels capteurs s'avèrent cependant peu précis et pourvus d'une dérive importante, ce qui peut amener à des situations dangereuses pour l' de l'exosquelette. De plus l'intégration et le traitement des paramètres (intensité, direction, sens) des six éléments mesurés requièrent un calcul très rapide qui nécessite des capacités de traitement incompatibles avec les exigences de portabilité de l'unité de traitement (compacité et consommation électrique). Le document US 2009/0210093 A1 est un exemple de l'état de la technique.

OBJET DE L'INVENTION

Un but de l'invention est de proposer un procédé de commande d'un exosquelette ambulatoire améliorant le comportement de l'exosquelette en situation de marche en s'approchant de la situation de marche naturelle de l'être humain.

RESUME DE L'INVENTION

A cet effet, on prévoit un procédé de commande d'un exosquelette ambulatoire lié à un utilisateur, l'exosquelette comprenant un élément de bassin sur lequel sont articulés deux membres inférieurs s'étendant sensiblement parallèlement aux membres inférieurs de l'utilisateur, chaque membre inférieur de l'exosquelette comportant un segment de cuisse articulé à un segment de jambe lui-même articulé à un pied, l'exosquelette étant pourvu d'actionneurs commandant la rotation et/ou le couple à appliquer aux articulations liant les membres inférieurs à l'élément de bassin et aux articulations liant les segments de cuisse aux segments de jambe, chaque pied de l'exosquelette étant lié à un pied correspondant de l'utilisateur et comprenant une interface sur laquelle repose un pied de l'utilisateur, l'exosquelette comprenant également des moyens de mesure de la composante normale à un plan d'appui du pied d'une force d'appui sous chaque pied de l'utilisateur. Selon l'invention, le procédé de commande comprend les étapes suivantes :

- mesurer uniquement la composante normale à un plan d'appui du pied de la force d'appui en un premier point sous chaque pied de l'utilisateur;
- calculer un objectif de valeur pour l'intensité d'une composante verticale de la résultante des forces d'équilibrage appliquées à l'exosquelette, la résultante des forces d'équilibrage étant exercée en un deuxième point de chaque pied de l'exosquelette, l'objectif de valeur de la composante verticale de la résultante des forces d'équilibrage appliquées à l'exosquelette étant une fonction de l'intensité de la composante normale de la force d'appui mesurée sous le pied correspondant de l'utilisateur ;
- entrer l'objectif de valeur calculé pour l'intensité d'une composante verticale de la résultante des forces d'équilibrage appliquées à l'exosquelette ainsi que la valeur de la composante normale à un plan d'appui du pied de la force d'appui mesurée sous chaque pied de l'utilisateur dans un modèle de l'ensemble utilisateur (100) + exosquelette ;
- Exécuter le modèle de l'ensemble utilisateur + exosquelette pour déterminer des consignes de commande à adresser aux actionneurs;
- commander les actionneurs selon les consignes de commande déterminées.

Ainsi, le procédé permet de mettre en œuvre un unique capteur à une composante (capteur uniaxial et non multiaxial) par pied délivrant une seule information. Le traitement de cette information ne requiert que peu de capacité de calcul, ce qui permet d'établir extrêmement rapidement les consignes de commandes des actionneurs. La mesure de la composante verticale de la force d'appui sous chaque pied de l'utilisateur permet d'identifier précisément l'intention de l'utilisateur de lever le pied pour passer d'une situation bipode à une situation unipode. La relation directe entre les efforts d'équilibrage verticaux et la composante verticale mesurée sous le pied de l'utilisateur permet un équilibrage continu de l'ensemble (exosquelette + utilisateur + charge utile). Il a été constaté que le comportement de l'exosquelette ainsi commandé en situation de marche est très proche de la marche naturelle de l'être humain.

L'invention concerne également un exosquelette comprenant un élément de bassin sur lequel sont articulés deux membres inférieurs s'étendant sensiblement parallèlement aux membres inférieurs de l'utilisateur, chaque membre inférieur de l'exosquelette comportant un segment de cuisse articulé à un segment de jambe lui-même articulé à un pied, chaque pied de l'exosquelette étant lié à un pied correspondant de l'utilisateur et comprenant une interface sur laquelle repose le pied de l'utilisateur, l'exosquelette étant pourvu d'actionneurs commandant les articulations liant les membres inférieurs à l'élément de bassin et les segments de cuisse aux segments de jambe, l'articulation du pied sur le segment de jambe demeurant libre, l'exosquelette comprenant également des moyens de mesure de la composante verticale d'une force d'appui sous chaque pied de l'utilisateur et une unité de traitement reliée aux moyens de mesure ainsi qu'aux actionneurs et agencée pour mettre en œuvre le procédé de l'invention.

D'autres caractéristiques et avantages de l'invention ressortiront à la lecture de la description qui suit de modes de réalisation particuliers non limitatifs de l'invention. L'invention est définie par les revendications 1 à 13 ci-après.

BREVE DESCRIPTION DES DESSINS

Il sera fait référence aux figures annexées parmi lesquelles :

- la figure 1 est une représentation schématique d'une modélisation tridimensionnelle d'un utilisateur équipé d'un exosquelette selon l'invention ;
- la figure 2 est une représentation schématique d'une modélisation plane dans un plan sagittal de l'utilisateur équipé de l'exosquelette de la figure 1 ;
- la figure 3 est une représentation schématique d'une modélisation plane dans un plan frontal de l'utilisateur équipé de l'exosquelette de la figure 1.

DESCRIPTION DETAILLEE DE L'INVENTION

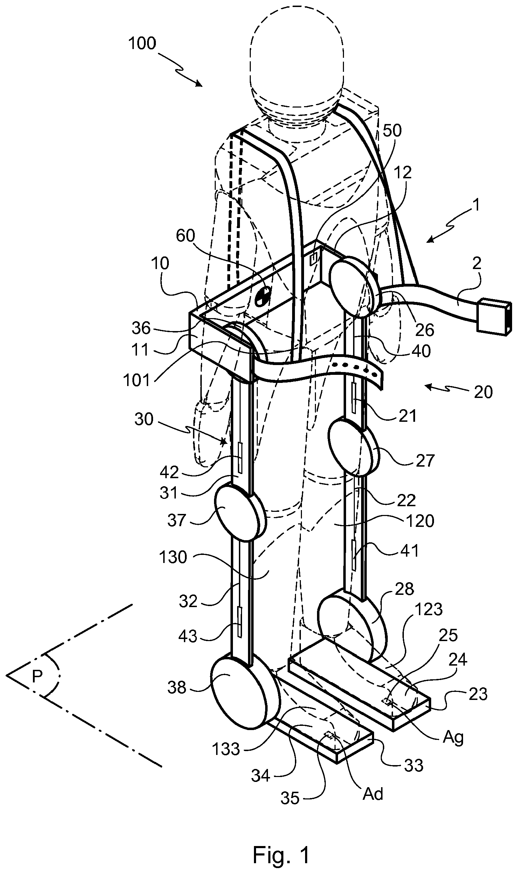

En référence à la figure 1, l'exosquelette selon l'invention et généralement désigné 1 est porté par un utilisateur 100. L'exosquelette 1 comprend un élément de bassin 10 situé sensiblement à la hauteur du bassin 101 de l'utilisateur 100. L'exosquelette 1 est relié à l'utilisateur 100 à l'aide d'un ensemble de bretelles et de sangles 2. Une charge utile (non représentée) peut également être supportée par l'élément de bassin 10. L'exosquelette 1 et son éventuelle charge utile ont un poids $P_E$ qui sera désigné dans la suite de la description comme correspondant au « poids de l'exosquelette ».

Deux membres inférieurs 20 et 30 de l'exosquelette 1 sont respectivement articulés sur deux extrémités 11 et 12 de l'élément de bassin 10 et s'étendent sensiblement parallèlement aux membres inférieurs 120 et 130 de l'utilisateur 100. Le membre inférieur gauche 20 de l'exosquelette 1 comporte un segment de cuisse 21 articulé à un segment de jambe 22 lui-même articulé à un pied 23. Le pied 23 du membre inférieur gauche 20 comprend une interface plane 24 sur laquelle repose le pied gauche 123 de l'utilisateur. Un capteur piézométrique 25 est placé entre l'interface plane 24 du pied 23 de l'exosquelette 1 et le pied 123 de l'utilisateur 100. Ce capteur 25 permet de mesurer la composante verticale de la force d'appui $R_g$ sous le pied 123 de l'utilisateur 100. L'articulation 26 située entre l'élément de bassin 10 et le segment de cuisse 21 ainsi que l'articulation 27 située entre le segment de cuisse 21 et le segment de jambe 22 comprennent respectivement des actionneurs 40 et 41, ici sous la forme de vérins à câble électriques. Les actionneurs 40 et 41 sont pourvus de codeurs permettant de déterminer la position angulaire relative des éléments 11, 21 et 22. L'articulation 28 articulant le pied 23 sur le segment de jambe 22 est dépourvue d'actionneur et de codeur. Le pied 23 du membre inférieur gauche 20 est donc librement articulé sur le segment de jambe 22. Cette caractéristique permet notamment d'alléger le nombre d'informations à traiter et donc de réduire la puissance de calcul des moyens de traitement. Ceci permet également de minimiser les coûts de fabrication et d'instrumentation de l'exosquelette 1 ainsi que le volume et la masse des éléments en mouvement, réduisant les inerties internes de l'exosquelette.

De manière similaire, le membre inférieur droit 30 de l'exosquelette 1 comporte un segment de cuisse 31 articulé via une articulation 36 à l'élément de bassin 10 et via une articulation 37 à un segment de jambe 32 lui-même articulé via une articulation 38 à un pied 33. Le pied 33 comprend une interface plane 34 et un capteur piézométrique 35 sur lequel repose le pied droit 133 de l'utilisateur 100. Ce capteur 35 permet de mesurer la composante verticale de la force d'appui $R_d$ sous le pied 133 de l'utilisateur 100. Les articulations 36 et 37 comprennent respectivement des actionneurs 42 et 43 -ici sous la forme de vérins à câble électriques- pourvus de codeurs permettant de déterminer la position relative des éléments 12, 31 et 32. Le pied 33 est librement articulé via une articulation 38 sur le segment de jambe 32.

Les actionneurs 40 à 42 et leurs codeurs respectifs ainsi que les capteurs 25 et 35 sont reliés à une unité 50 de traitement et de commande. L'unité 50 comprend des moyens de calcul 51, une batterie électrique 52 ainsi que des moyens de commande des actionneurs 40 à 42, sous la forme d'un générateur de signaux électriques 53.

Les liaisons entre l'exosquelette 1 et l'utilisateur 100 s'effectuent au niveau des pieds 123 et 133 de l'utilisateur 100 et au niveau du buste de celui-ci. Les segments de cuisse 21, 31 ainsi que les segments de jambe 22 et 32 sont dépourvus de liaison avec l'utilisateur 100 et sont donc libres par rapport à celui-ci.

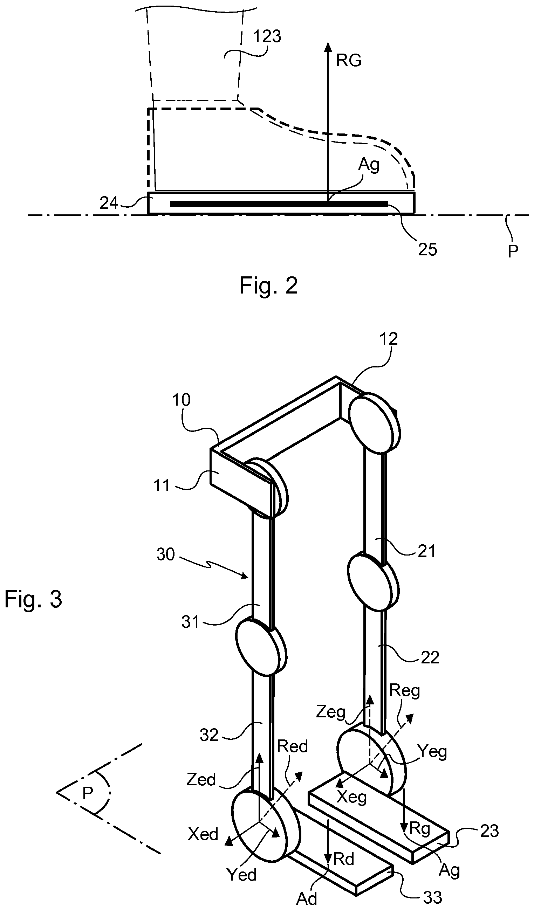

La commande de l'exosquelette va maintenant être décrite en référence aux figures 1 à 3.

En phase statique comme en phase dynamique de marche, les capteurs 25 et 35 mesurent respectivement les intensités des composantes normales $R_{Ng}$ et $R_{Nd}$ des forces d'appui $R_g$ et $R_d$. Les composantes normales $R_{Ng}$ et $R_{Nd}$ sont respectivement les composantes des forces d'appui $R_g$ et $R_d$ mesurées perpendiculairement au plan P d'appui respectif des pieds 123 et 133. Ici, ces mesures sont effectuées en un premier point gauche $A_g$ et un premier point droit Ad respectivement situés à l'aplomb des capteurs 25 et 35. Ces mesures sont transmises à l'unité 50. L'unité 50 détermine alors, à partir des intensités mesurées des composantes normales $R_{Ng}$ et $R_{Nd}$, une série de consignes de commande à destination des actionneurs 40, 41, 42 et 43 afin qu'ils appliquent respectivement aux articulations 26, 27, 36 et 37 des couples d'équilibrage à l'exosquelette 100. L'ensemble de ces couples d'équilibrage résulte en une première force d'équilibrage $R_{Eg}$ appliquée par l'exosquelette 100 sur l'interface 24 du pied gauche 23 et une deuxième force d'équilibrage $R_{Ed}$ appliquée par l'exosquelette 100 sur l'interface 34 du pied droit 33. Dans un repère orthonormé $O_G$ (x, y, z) lié au centre de l'articulation 28, la première force d'équilibrage $R_{Eg}$ comprend :

- une composante horizontale sagittale $X_{EG}$ ;
- une composante horizontale transversale $Y_{Eg}$ ;
- une composante verticale $Z_{Eg}$.

Dans un repère orthonormé $O_d$ (x, y, z) lié au centre de l'articulation 38, la deuxième force d'équilibrage $R_{Ed}$ comprend :

- une composante horizontale sagittale $X_{Ed}$;
- une composante horizontale transversale $Y_{Ed}$ ;

- une composante verticale $Z_{Eg}$.

Selon un premier mode de réalisation de l'invention, l'unité 50 commande aux actionneurs 40 à 43 l'application de couples d'équilibrage de façon à ce que l'intensité des composantes verticales $Z_{Eg}$ et $Z_{Ed}$ respectives des résultantes des forces d'équilibrage $R_{Eg}$ et $R_{Ed}$ appliquées à l'exosquelette 1 et exercée au centre des articulations 28 et 38 respectifs de chaque pied 23 et 33 de l'exosquelette 1 soit égales à des objectifs de valeur qui s'écrivent selon la loi affine ci-dessous :

$$Z_{Ed} = (\alpha_d * P_E) + b;$$

$$Z_{Eg} = (\alpha_g * P_E) + b';$$

Avec

$$\alpha_d = R_{Nd} / (R_{Nd} + R_{Ng});$$

$$\alpha_g = R_{Ng} / (R_{Nd} + R_{Ng}).$$

Les paramètres b et b' sont des composants indépendants de $R_{Nd}$ et $R_{Ng}$ qui peuvent être nuls ou adopter les valeurs discrètes suivantes :

- b est une constante non nulle si l'intensité de la composante normale de la force d'appui mesurée sous le pied gauche de l'utilisateur $R_{Ng}$ est supérieure à une valeur de seuil inférieur prédéfinie égale à dix décanewtons;
- b est nul si l'intensité de la composante normale de la force d'appui mesurée sous le pied gauche de l'utilisateur $R_{Ng}$ est inférieure à une valeur de seuil inférieur prédéfinie égale à dix décanewtons;
- b' est une constante non nulle si l'intensité de la composante normale de la force d'appui mesurée sous le pied droit de l'utilisateur $R_{Nd}$ est supérieure à une valeur de seuil inférieur prédéfinie égale à dix décanewtons;
- b' est nul si la composante normale de la force d'appui mesurée sous le pied droit de l'utilisateur $R_{Nd}$ est inférieure à une valeur de seuil inférieur prédéfinie égale à dix décanewtons.

Les valeurs des paramètres b et b' peuvent par exemple être liées aux caractéristiques de reproductibilité des mesures de chacun des capteurs 25 et 35.

Dans le cas où l'on souhaite introduire un défaut d'assistance $Z_B$ prédéfini correspondant à un effort constant appliqué par l'exosquelette 1 sur l'utilisateur 100, les objectifs de valeur des intensités des composantes verticales $Z_{Eg}$ et $Z_{Ed}$ respectives des résultantes des forces d'équilibrage $R_{Eg}$ et $R_{Ed}$ appliquées à l'exosquelette 1 et exercée sur chaque pied 23 et 33 de l'exosquelette 1 deviennent :

$$Z_{Ed} = \alpha_d * (P_E - Z_B) + b;$$

$$Z_{Eg} = \alpha_g * (P_E - Z_B) + b'.$$

Selon une variante de l'invention, l'équilibrage de l'effort dynamique vertical s'exerçant sur l'exosquelette est amélioré lorsque l'on ajoute à $P_E$ un terme qui est le produit de la masse $m_E$ de l'exosquelette par l'accélération $d^2/dt^2(z_{GE})$ de son centre de gravité, $Z_{GE}$ étant la composante verticale des coordonnées du centre de gravité $G_E$ de l'exosquelette 1 dans un repère quelconque dissocié de l'exosquelette 1. Les objectifs de valeur des intensités des composantes verticales $Z_{Eg}$ et $Z_{Fd}$ respectives des résultantes des forces d'équilibrage $R_{Eg}$ et $R_{Ed}$ appliquées à l'exosquelette 1 et exercée sur chaque pied 23 et 33 de l'exosquelette 1 deviennent :

$$Z_{Ed} = \alpha d * (P_E + m_E * d^2/dt^2(z_{GE}) - Z_B) + b;$$

$$Z_{Eg} = \alpha g * (P_E + m_E * d^2/dt^2(z_{GE}) - Z_B) + b'.$$

L'accélération du centre de gravité $G_E$ de l'exosquelette 1 est mesurée à l'aide d'un accéléromètre 60, ou tout autre moyen équivalent, relié à l'unité de commande 50.

Dans le cas où le plan d'appui P est incliné par rapport à l'horizontale d'un angle $\alpha$, les expressions ci-dessus des objectifs de valeur des intensités des composantes verticales $Z_{Eg}$ et $Z_{Ed}$ demeurent inchangées si les deux pieds 23 et 33 subissent une même inclinaison par rapport à l'horizontale.

Dans le cas d'un terrain accidenté où les inclinaisons dans un plan sagittal $\alpha_{23}$ et $\alpha_{33}$ respectives des pieds 23 et 33 par rapport à l'horizontale sont différentes, et qu'elles ont des valeurs supérieures à une valeur seuil $\alpha_{23,33MAX}$, la connaissance du poids $P_U$ de l'utilisateur 100 et les valeurs des inclinaisons $\alpha_{23}$ et $\alpha_{33}$ de chaque pied 23 et 33 permettent d'affiner le calcul les objectifs de valeur des intensités des composantes verticales des résultantes des forces d'équilibrage $R_{Eg}$ et $R_{Ed}$ à appliquer à l'exosquelette. Les valeurs des angles $\alpha_{23}$ et $\alpha_{33}$ peuvent être mesurées à l'aide d'inclinomètres, et les valeurs $R_{Ng}{}^{\alpha}$ et $R_{Nd}{}^{\alpha}$ correspondant respectivement aux composante normales des forces d'appui $R_{Ng}$ et $R_{Nd}$ mesurées respectivement sous le pied gauche 23 et droit 33 de l'utilisateur 100, projetée sur la verticale pour tenir compte de l'inclinaison du pied. Ces valeurs sont déterminées grâce à un modèle d'équilibre et se substituent aux mesures $R_{Ng}$ et $R_{Nd}$ dans les relations ci-dessus lorsque les angles $\alpha_{23}$ et $\alpha_{33}$ sont supérieurs à la valeur $\alpha_{23,33MAX}=$ 10 degrés s'écrivent :

$$R_{Ng}{}^{\alpha} \quad = \quad (X_g{}^2 + \quad Y_g{}^2)^{1/2} \quad * \quad \sin \quad (\arcsin(R_{Ng}/(X_g{}^2 + Y_g{}^2)^{1/2}) + \alpha_{23});$$

$$R_{dg}{}^{\alpha} \quad = \quad (X_d{}^2 + \quad Y_d{}^2)^{1/2} \quad * \quad \sin \quad (\arcsin(R_{Nd}/(X_d{}^2 + Y_d{}^2)^{1/2}) + \alpha_{33}).$$

Où

$X_g$ est la composante horizontale sagittale de la force d'appui exercée par le pied gauche de l'utilisateur 100 et déterminée à l'aide d'un modèle de l'ensemble exosquelette 1+ utilisateur 100 ;

$Y_g$ est la composante horizontale transversale de la force d'appui exercée par le pied gauche de l'utilisateur 100 et déterminée à l'aide d'un modèle de l'ensemble exosquelette 1+ utilisateur 100 ;

$X_d$ est la composante horizontale sagittale de la force d'appui exercée par le pied droit de l'utilisateur 100 et déterminée à l'aide d'un modèle de l'ensemble exosquelette 1+ utilisateur 100 ;

$Y_d$ est la composante horizontale transversale de la force d'appui exercée par le pied droit de l'utilisateur 100 et déterminée à l'aide d'un modèle de l'ensemble exosquelette 1+ utilisateur 100 ;

La détermination des valeurs de chacun des couples d'équilibrage à appliquer par les actionneurs 40 à 43 est réalisée comme suit:

- mesures par les capteurs 25 et 35 des composantes normales $R_{Ng}$ et $R_{Nd}$ respectives des forces d'appui $R_g$ et $R_d$ mesurées aux points d'appui $A_g$ et $A_d$;
- calcul des objectifs de valeur pour l'intensité des composantes verticales $Z_{Ed}$ et $Z_{Eg}$ respectives des résultantes des forces d'équilibrage $R_{Eg}$ et $R_{Ed}$ appliquées à l'exosquelette 1 à partir d'une des lois affines précédentes ;

- entrer les objectifs de valeur calculé pour l'intensité des composantes verticales ZEd et ZEg de la résultante des forces d'équilibrage REg et REd appliquées à l'exosquelette 1 ainsi que la valeur de la composante normale $R_{Ng}$ et $R_{Nd}$ à un plan d'appui P des pieds 123 et 133 de la force d'appui Rd et Rg mesurée sous chaque pied 123 et 133 de l'utilisateur 1 dans un modèle d'équilibre de l'ensemble utilisateur (100) + exosquelette (1) ;
- l'unité 50 exécute le modèle d'équilibre (statique ou dynamique) bi- ou tridimensionnel de l'ensemble utilisateur 100 + exosquelette 1 retenu et , détermine les valeurs des composantes horizontales ($X_{Eg}$ et $X_{Ed}$ voire $Y_{Eg}$, $Y_{Ed}$ dans le cas d'un modèle tridimensionnel) des forces d'équilibrage $R_{Eg}$ et $R_{Ed}$ ;
- les consignes de commande à adresser aux actionneurs 40 à 43 sont déduites par exemple à l'aide d'une matrice Jacobienne transposée de l'exosquelette 1.

Différentes modélisations de l'ensemble exosquelette 1 + utilisateur 100 peuvent être utilisées pour la détermination des composantes horizontales des forces d'équilibrage à appliquer. Ces modèles sont connus de l'homme du métier et certains d'entre eux sont notamment décrits dans les documents suivants : revue Mechatronics 24 (2014) 168-176 ; 40th Southeastern Symposium on System Theory University of New Orleans, March 16-18, 2008 TA1.4 ; Advanced Robotics, Vol. 20, No. 9, pp. 989-1014 (2006).

Un exemple possible de modèle tridimensionnel statique est donné ci-dessous :

$$
\begin{cases}
(1)\ X_{E_g} + X_{E_d} + X_B = 0 \\
(3)\ Z_{E_g} + Z_{E_d} + Z_B - P_E = 0 \\
(4)\ Z_{E_g} y_g + Z_B y_B - P_E y_{G_E} = 0 \\
(5)\ X_{E_g} z_g - Z_{E_g} x_g + X_B z_B - Z_B x_B + P_E x_{G_E} = 0 \\
(6)\ -X_{E_g} y_g - X_B y_B = 0
\end{cases}
$$

Où les variables sont :

$X_B$ : effort horizontal sagittal appliqué par l'opérateur au niveau du buste (tronc) grâce à une liaison adaptée.

$Z_B$ : effort vertical appliqué par l'opérateur au niveau du buste (tronc) grâce à une liaison adaptée correspondant au défaut d'assistance.

$x_B$ : coordonnée sagittale du point d'application de l'effort appliqué par l'opérateur au niveau du buste dans le repère orthonormé

$y_B$ : coordonnée transversale du point d'application de l'effort appliqué par l'opérateur au niveau du buste dans le repère orthonormé

$z_B$ : coordonnée verticale du point d'application de l'effort appliqué par l'opérateur au niveau du buste dans le repère orthonormé

$x_g$ : coordonnée sagittale du pied gauche dans le repère orthonormé

$y_g$ : coordonnée transversale du pied gauche dans le repère orthonormé

$z_g$ : coordonnée verticale du pied gauche dans le repère orthonormé.

$x_{GE}$ : coordonnée sagittale du centre de gravité de l'exosquelette dans le repère orthonormé

$y_{GE}$ : coordonnée transversale du centre de gravité de l'exosquelette dans le repère orthonormé

Selon un deuxième mode de réalisation de l'invention, un défaut d'assistance $Z_B$ prédéfini est entré dans l'unité de commande 50. Le défaut d'assistance $Z_B$ correspond à un effort constant appliqué par l'exosquelette 1 sur l'utilisateur 100 et implique que l'utilisateur 100 ressent en permanence une portion du poids propre $P_E$ de l'exosquelette 1. Un tel défaut d'assistance $Z_B$ peut avoir comme finalité de garder une tension minimale dans l'ensemble de bretelles et de sangles 2 qui lient l'exosquelette 1 à l'utilisateur 100.

Dans ce deuxième mode de réalisation, l'unité 50 commande aux actionneurs 40 à 43 l'application de couples d'équilibrage de façon à ce que l'intensité des composantes verticales $Z_{Ed}$ et $Z_{Eg}$ respectives des résultantes des forces d'équilibrage $R_{Eg}$ et $R_{Ed}$ appliquées à l'exosquelette 1 et exercée sur chaque pied 23 et 33 de l'exosquelette 1 s'écrive :

$$Z_{Ed} = K * R_{Nd};$$

$$Z_{Eg} = K * R_{Ng};$$

dans lequel K est un coefficient de proportionnalité égal à : $K = (P_E - Z_B)/(P_U + Z_B)$ .

Dans le cas d'un terrain accidenté où les inclinaisons dans un plan sagittal $\alpha_{23}$ et $\alpha_{33}$ respectives des pieds 23 et 33 par rapport à l'horizontale ont des valeurs supérieures à une valeur seuil $\alpha_{23,33MAX}$, la connaissance du poids $P_U$ de l'utilisateur 100 et les valeurs des inclinaisons $\alpha_{23}$ et $\alpha_{33}$ de chaque pied 23 et 33 permettent d'affiner le calcul les objectifs de valeur des intensités des composantes verticales des résultantes des forces d'équilibrage $R_{Eg}$ et $R_{Ed}$ à appliquer à l'exosquelette. Les valeurs des angles $\alpha_{23}$ et $\alpha_{33}$ peuvent être mesurées à l'aide d'inclinomètres, et les valeurs $R_{Ng}^{\alpha}$ et $R_{Nd}^{\alpha}$ pondérées à substituer aux mesures $R_{Ng}$ et $R_{Nd}$ dans les relations ci-dessus lorsque les angles $\alpha_{23}$ et $\alpha_{33}$ sont supérieurs à la valeur $\alpha_{23,33MAX} = 10$ degrés s'écrivent :

$$R_{Ng}^{\alpha} = R_{Ng} * \cos(\alpha_{23});$$

$$R_{Nd}^{\alpha} = R_{Nd} * \cos(\alpha_{33}).$$

Les procédés selon les modes de réalisation ci-dessus peuvent être améliorés par l'ajout d'une étape supplémentaire de saturation de l'intensité des composantes verticales $Z_{Ed}$ et $Z_{Eg}$ respectives des résultantes des forces d'équilibrage $R_{Eg}$ et $R_{Ed}$ appliquées à l'exosquelette 1 et exercées respectivement sur le pied 23 et 33 de l'exosquelette 1.

Cette étape se fait à l'issue de la détermination par l'unité 50 des valeurs de l'intensité des composantes verticales $Z_{Ed}$ et $Z_{Eg}$ en fonction de l'intensité des composantes verticale $R_{Nd}$ et $R_{Ng}$ mesurée sous le pied 123 ou 133 de l'utilisateur. Un test logique est appliqué aux valeurs des consignes de commande déterminées par l'unité 50 avant l'envoi de celles-ci aux actionneurs 40 à 43. Par exemple, lorsque l'utilisateur 100 souhaite lever le pied gauche 123, l'intensité de la composante normale $R_{Ng}$ de la force d'appui $R_G$ mesurée sous le pied gauche 123 de l'utilisateur 100 décroit depuis une valeur sensiblement égale à la moitié du poids $P_U$ de l'utilisateur 100 jusqu'à 0 tandis que l'intensité de la composante normale $R_{Nd}$ de la force d'appui $R_d$ mesurée sous le pied droit 133 de l'utilisateur 100 croit depuis une valeur sensiblement égale à la moitié du poids $P_U$ de l'utilisateur 100 jusqu'à une valeur sensiblement égale à l'intégralité du poids $P_U$ de l'utilisateur 100. Lors de l'étape supplémentaire de saturation, l'unité 50 surveille la valeur composante normale $R_{Nd}$ de la force d'appui $R_d$ mesurée sous le pied droit 133 de l'utilisateur 100 et identifie le moment $T_S$ auquel la valeur composante normale $R_{Nd}$ dépasse une valeur de seuil supérieur $R_{NdS}$ prédéfinie, fixée ici à 70 % du poids $P_U$ de l'utilisateur 100. A ce moment $T_S$, l'unité 50 commande les actionneurs 40 à 43 de façon à ce que l'intensité de la composante verticale $Z_{Ed}$ de la résultante $R_{Ed}$ des forces d'équilibrage appliquées à l'exosquelette 1 et exercée sur le pied 33 de l'exosquelette 1 soit égale à une valeur saturée, ici cette valeur saturée est égale au poids $P_E$ de l'exosquelette 1. Une étape similaire de saturation est appliquée à la résultante $R_{Eg}$ des forces d'équilibrage appliquées à l'exosquelette 1 et exercée sur le pied 23 de l'exosquelette 1.

Alternativement, la valeur saturée est égale au poids $P_E$ de l'exosquelette 1 augmenté du produit de sa masse par l'accélération verticale de son centre de gravité G et/ou la valeur de seuil supérieure est comprise entre 0.5 décanewtons et 10 décanewtons. L'accélération du centre de gravité G de l'exosquelette 1 est mesurée à l'aide d'un accéléromètre 60, ou tout autre moyen équivalent, relié à l'unité de commande 50.

Bien qu'il subsiste des déséquilibres statiques, notamment en ce qui concerne les moments de rotation autours des axes AX, AY et AZ, les inventeurs se sont aperçus qu'un procédé de commande comportant la génération d'une consigne commandant aux actionneurs 40 à 43 l'application d'un ensemble de forces d'équilibrage dont la composante verticale de la résultante $R_{Nd}$ et $R_{Ng}$ exercée sur chaque pied 33 et 23 par l'exosquelette sur le sol est proportionnelle à la composante verticale $Z_{Ed}$ et $Z_{Eg}$ mesurée sous le pied 133, respectivement 123, améliorait le comportement de l'exosquelette en situation de marche.

Le confort et l'impression de sécurité de l'utilisateur 100 sont grandement améliorés. L'absence de moments statiques résiduels sur l'utilisateur 100 permet également une amélioration du confort de celui-ci.

La simplicité de la mesure et de la détermination des efforts d'équilibrage à partir de cette mesure réduit la puissance de calcul requise et améliore la fluidité de l'exosquelette 100 en situation de marche.

Bien entendu, l'invention n'est pas limitée au mode de réalisation décrit mais englobe toute variante entrant dans le champ de l'invention telle que définie par les revendications.

En particulier,

- bien qu'ici l'utilisateur soit lié à l'exosquelette à l'aide d'un ensemble de bretelles et de sangles, l'invention s'applique également à d'autres moyens de solidarisation de l'utilisateur à l'exosquelette tels que par exemple, un ensemble d'éléments rigides, une ceinture ou des bandes auto-agrippantes ;
- bien qu'ici chaque pied des membres inférieurs de l'exosquelette comprenne une interface plane sur laquelle repose un pied de l'utilisateur, l'invention s'applique également à d'autres types d'interface entre le pied de l'exosquelette et le pied de l'utilisateur comme par exemple une interface linéaire, ponctuelle ou comprenant une pluralité de surfaces articulées entre elles ;
- bien qu'ici la mesure de la composante verticale de la force d'appui sous chaque pied de l'utilisateur se fasse au moyen d'un capteur piézométrique, l'invention s'applique également à d'autres moyens de mesure de la force d'appui sous le pied de l'utilisateur comme par exemple une jauge de déformation ;
- bien qu'ici les actionneurs soient alimentés à l'aide d'une batterie électrique, l'invention s'applique également à d'autres types de source d'énergie comme par exemple un câble électrique, de l'énergie pneumatique ou un moteur à explosion ;
- bien qu'ici, la valeur de seuil inférieur soit égale à dix décanewtons, l'invention s'applique également à d'autres valeurs de seuil inférieur prédéfinies comme par exemple une première valeur seuil prédéfinie comprise entre 0.5 et 10 décanewtons ;
- bien qu'ici la valeur de seuil supérieur soit égale à 70 % du poids de l'utilisateur, l'invention s'applique également à d'autres valeurs de seuil supérieur prédéfinies comme par exemple une valeur de seuil supérieur prédéfinie comprise entre 70 % et 95 % du poids de l'utilisateur de l'exosquelette, ou une valeur de seuil supérieure comprise entre 0.5 décanewtons et 10 décanewtons ;

- bien qu'ici la valeur constante saturée soit égale au poids de l'exosquelette, l'invention s'applique également à d'autres valeurs constantes saturées, comme par exemple une fraction du poids de l'exosquelette pouvant varier entre 80 et 100 % du poids de l'exosquelette ;
- le poids $P_U$ de l'utilisateur peut être mesuré par pesée de l'utilisateur avant qu'il endosse l'exosquelette et introduit ou par une mesure réalisée par les capteurs de l'exosquelette ;
- bien qu'ici les forces d'équilibrage appliquées sur l'exosquelette soient appliquées au centre des articulations, l'invention s'applique également à d'autres deuxièmes points d'application des forces d'équilibrage, comme par exemple sous le pied de l'utilisateur ou au niveau du talon de l'utilisateur lorsque par exemple l'exosquelette est pourvu d'un actionneur de cheville;
- bien qu'ici les premiers points en lesquels sont mesurés les composantes normales de la force d'appui de chaque pied soient différents des deuxième points en lesquels sont destinés à être appliqués les composantes verticales des résultantes des forces d'équilibrage, l'invention s'applique également à des premiers et deuxièmes points identiques, pour chaque pied ;
- bien qu'ici des valeurs pondérées se substituent aux valeurs des mesures de l'effort normal aux appuis lorsque les angles d'inclinaison des pieds sont supérieurs à une valeur seuil de 10 degrés, l'invention s'applique également à d'autres valeurs seuils comme par exemple 5, 15 , 30 degrés ou une valeur quelconque ;
- - bien qu'ici les valeurs des composantes horizontales des forces d'équilibrage soient déterminées à l'aide d'un modèle d'équilibrage statique de l'exosquelette , l'invention s'applique également à l'utilisation de n'importe quel modèle d'équilibrage de l'exosquelette comme par exemple ceux décrits dans l'art antérieur divulgué dans la demande.

## Revendications

1. Procédé de commande d'un exosquelette (1) ambulatoire lié à un utilisateur (100), l'exosquelette (1) comprenant un élément de bassin (10) sur lequel sont articulés deux membres inférieurs (20, 30) s'étendant sensiblement parallèlement aux membres inférieurs (120, 130) de l'utilisateur (1), chaque membre inférieur (20, 30) de l'exosquelette (1) comportant un segment de cuisse (21, 31) articulé à un segment de jambe (22, 32) lui-même articulé à un pied (23, 33), l'exosquelette (1) étant pourvu d'actionneurs (40, 41, 42, 43) commandant la rotation et/ou le couple à appliquer aux articulations (26, 27, 36, 37) liant les membres inférieurs (20, 30) à l'élément de bassin (10) et aux articulations liant les segments de cuisse (21, 31) aux segments de jambe (22, 32), chaque pied (23, 33) de l'exosquelette (1) étant lié à un pied (123, 133) correspondant de l'utilisateur (100) et comprenant une interface 24, 34) sur laquelle repose un pied (123, 133) de l'utilisateur (100), l'exosquelette (1) comprenant également des moyens de mesure (25, 35) de la composante normale ($R_{Ng}$, $R_{Nd}$) à un plan d'appui (P) du pied (123, 133) d'une force d'appui (Rd, Rg) sous chaque pied (123, 133) de l'utilisateur (1), le procédé de commande étant **caractérisé en ce qu'**il comprend les étapes suivantes :

   - mesurer uniquement la composante normale ($R_{Ng}$, $R_{Nd}$) à un plan d'appui (P) du pied (123, 133) de la force d'appui ($R_d$, $R_g$) en un premier point sous chaque pied (123, 133) de l'utilisateur (1) ;
   - calculer un objectif de valeur pour l'intensité d'une composante verticale ($Z_{Ed}$, $Z_{Eg}$) de la résultante des forces d'équilibrage ($R_{Eg}$, $R_{Ed}$) appliquées à l'exosquelette (1), la résultante des forces d'équilibrage étant exercée en un deuxième point de chaque pied (23, 33) de l'exosquelette (1), l'objectif de valeur de la composante verticale ($Z_{Ed}$, $Z_{Eg}$) de la résultante des forces d'équilibrage ($R_{Eg}$, $R_{Ed}$) appliquées à l'exosquelette (1) étant une fonction de l'intensité de la composante normale ($R_{Ng}$, $R_{Nd}$) de la force d'appui ($R_d$, $R_g$) mesurée sous le pied (123, 133) correspondant de l'utilisateur (1) ;
   - entrer l'objectif de valeur calculé pour l'intensité d'une composante verticale ($Z_{Ed}$, $Z_{Eg}$) de la résultante des forces d'équilibrage ($R_{Eg}$, $R_{Ed}$) appliquées à l'exosquelette (1) ainsi que la valeur de la composante normale ($R_{Ng}$, $R_{Nd}$) à un plan d'appui (P) du pied (123, 133) de la force d'appui ($R_d$, $R_g$) mesurée sous chaque pied (123, 133) de l'utilisateur (1) dans un modèle de l'ensemble utilisateur (100) + exosquelette (1) ;
   - Exécuter le modèle de l'ensemble utilisateur (100) + exosquelette (1) pour déterminer des consignes de commande à adresser aux actionneurs (40, 41, 42, 43) ;
   - commander les actionneurs (40, 41, 42, 43) selon les consignes de commande déterminées.

2. Procédé selon la revendication 1, dans lequel l'objectif de valeur pour l'intensité de la composante verticale ($Z_{Ed}$, $Z_{Eg}$) de la résultante des forces d'équilibrage ($R_{Eg}$, $R_{Ed}$) appliquées à l'exosquelette (1) et exercée sur chaque pied (23, 33) de l'exosquelette (1) s'écrit :

$$Z_{Ed} = \alpha_d * (P_E - Z_B) + b;$$

$$Z_{Eg} = \alpha_g * (P_E - Z_B) + b';$$

Avec

$$\alpha_d = R_{Nd} / (R_{Nd} + R_{Ng});$$

$$\alpha_g = R_{Ng} / (R_{Nd} + R_{Ng});$$

dans lequel

- $Z_{Ed}$ est la composante verticale de la résultante des forces d'équilibrage appliquées sur le pied droit de l'exosquelette (1) ;
- $Z_{Eg}$ est la composante verticale de la résultante des forces d'équilibrage appliquées sur le pied gauche de l'exosquelette (1);
- $R_{Nd}$ est la composante normale de la force d'appui mesurée sous le pied droit (33) de l'utilisateur (100) ;
- $R_{Ng}$ est la composante normale de la force d'appui mesurée sous le pied gauche (23) de l'utilisateur (100);
- $P_E$ est le poids de l'exosquelette (1);
- $Z_B$ est un défaut d'assistance prédéfini correspondant à un effort constant appliqué par l'exosquelette (1) sur l'utilisateur (100);
- b et b' sont des composants indépendants des forces d'appuis mesurées sous les pieds (23,33) de l'utilisateur (100).

3. Procédé selon la revendication 1, dans lequel l'intensité de la composante verticale ($Z_{Ed}$, $Z_{Eg}$) de la résultante des forces d'équilibrage ($R_{Eg}$, $R_{Ed}$) appliquées à l'exosquelette (1) et exercée sur chaque pied (23, 33) de l'exosquelette (1) s'écrit :

$$Z_{Ed} = \alpha_d * (P_E - Z_B) + b;$$

$$Z_{Eg} = \alpha_g * (P_E - Z_B) + b';$$

Avec

$$\alpha_d = R_{Nd}^{\alpha} / (R_{Nd}^{\alpha} + R_{Ng}^{\alpha});$$

$$\alpha_g = R_{Ng}^{\alpha} / (R_{Nd}^{\alpha} + R_{Ng}^{\alpha});$$

dans lequel

- $Z_{Ed}$ est la composante verticale de la résultante des forces d'équilibrage appliquées sur le pied droit de l'exosquelette (1) ;
- $Z_{Eg}$ est la composante verticale de la résultante des forces d'équilibrage appliquées sur le pied gauche de l'exosquelette (1);
- $R_{Nd}^{\alpha}$ est la composante normale de la force d'appui mesurée sous le pied droit de l'utilisateur, projetée sur la verticale pour tenir compte de l'inclinaison du pied grâce à un modèle d'équilibre et à la mesure de l'inclinaison du pied ;
- $R_{Ng}^{\alpha}$ est la composante normale de la force d'appui mesurée sous le pied gauche de l'utilisateur, projetée sur la verticale tenir compte de l'inclinaison du pied;
- $P_E$ est le poids de l'exosquelette (1);

- $Z_B$ est un défaut d'assistance prédéfini correspondant à un effort constant appliqué par l'exosquelette (1) sur l'utilisateur (100);
- b et b' sont des composants indépendants des forces d'appuis mesurées sous les pieds (23,33) de l'utilisateur (100).

4.   Procédé selon la revendication 1, dans lequel l'intensité de la composante verticale ($Z_{Ed}$, $Z_{Eg}$) de la résultante des forces d'équilibrage ($R_{Eg}$, $R_{Ed}$) appliquées à l'exosquelette (1) et exercée sur chaque pied (23, 33) de l'exosquelette (1) s'écrit :

$$Z_{Ed} = \alpha_d * (P_E + m_E * d^2/dt^2 (z_{GE}) - Z_B) + b;$$

$$Z_{Eg} = \alpha_g * (P_E + m_E * d^2/dt^2 (z_{GE}) - Z_B) + b';$$

Avec

$$\alpha_d = R_{Nd}^{\alpha} / (R_{Nd}^{\alpha} + R_{Ng}^{\alpha});$$

$$\alpha_g = R_{Ng}^{\alpha} / (R_{Nd}^{\alpha} + R_{Ng}^{\alpha});$$

dans lequel

- $Z_{Ed}$ est la composante verticale de la résultante des forces d'équilibrage appliquées sur le pied droit de l'exosquelette (1) ;
- $Z_{Eg}$ est la composante verticale de la résultante des forces d'équilibrage appliquées sur le pied gauche de l'exosquelette (1);
- $R_{Nd}^{\alpha}$ est la composante normale de la force d'appui mesurée sous le pied droit de l'utilisateur, projetée sur la verticale pour tenir compte de l'inclinaison du pied grâce à un modèle d'équilibre et à la mesure de l'inclinaison du pied ;
- $R_{Ng}^{\alpha}$ est la composante normale de la force d'appui mesurée sous le pied gauche de l'utilisateur, projetée sur la verticale tenir compte de l'inclinaison du pied;
- $P_E$ est le poids de l'exosquelette (1);
- $m_E * d^2/dt^2 (z_{GE})$ est le produit de la masse de l'exosquelette par l'accélération de son centre de gravité G()
- $Z_B$ est un défaut d'assistance prédéfini correspondant à un effort constant appliqué par l'exosquelette (1) sur l'utilisateur (100);
- b et b' sont des composants indépendants des forces d'appuis mesurées sous les pieds (123,133) de l'utilisateur (100).

5.   Procédé selon l'une des revendications 2 à 4, dans lequel les composants b et b' adoptent les valeurs discrètes suivantes :

- b est une constante non nulle si l'intensité de la composante normale de la force d'appui mesurée sous le pied gauche de l'utilisateur ($R_{Ng}$) est supérieure à une valeur de seuil inférieur prédéfinie ;
- b est nul si l'intensité de la composante normale de la force d'appui mesurée sous le pied gauche de l'utilisateur ($R_{Ng}$) est inférieure à une valeur de seuil inférieur prédéfinie;
- b' est une constante non nulle si l'intensité de la composante normale de la force d'appui mesurée sous le pied droit de l'utilisateur ($R_{Nd}$) est supérieure à une valeur de seuil inférieur prédéfinie;
- b' est nul si la composante normale de la force d'appui mesurée sous le pied droit de l'utilisateur ($R_{Nd}$) est inférieure à une valeur de seuil inférieur prédéfinie.

6.   Procédé selon la revendication 1, dans lequel la valeur de seuil inférieur est comprise entre 0.5 décanewtons et 10 décanewtons.

7.   Procédé selon la revendication 1, dans lequel l'objectif de valeur pour l'intensité de la composante verticale ($Z_{Ed}$, $Z_{Eg}$) de la résultante des forces d'équilibrage ($R_{Eg}$, $R_{Ed}$) appliquées à l'exosquelette (1) et exercée sur chaque pied (23, 33) de l'exosquelette (1) s'écrit :

$$Z_{Ed} = K * R_{Nd};$$

$$Z_{Eg} = K * R_{Ng};$$

Avec

$$K = (P_E - Z_B) / (P_U + Z_B)$$

dans lequel

- $Z_{Ed}$ est la composante verticale de la résultante des forces d'équilibrage appliquées à l'exosquelette et mesurée sous le pied droit de l'exosquelette ;
- $Z_{Eg}$ est la composante verticale de la résultante des forces d'équilibrage appliquées à l'exosquelette et mesurée sous le pied gauche de l'exosquelette ;
- $R_{Nd}$ est la composante normale de la force d'appui mesurée sous le pied droit de l'utilisateur ;
- $R_{Ng}$ est la composante normale de la force d'appui mesurée sous le pied gauche de l'utilisateur ;
- $P_E$ est le poids de l'exosquelette (1);
- $P_U$ est le poids de l'utilisateur ;- $Z_B$ est un défaut d'assistance prédéfini correspondant à un effort constant appliqué par l'exosquelette (1) sur l'utilisateur (100).

8. Procédé selon la revendication 1, dans lequel l'objectif de valeur pour l'intensité de la composante verticale ($Z_{Ed}$, $Z_{Eg}$) de la résultante des forces d'équilibrage ($R_{Eg}$, $R_{Ed}$) appliquées à l'exosquelette (1) et exercée sur chaque pied (23, 33) de l'exosquelette (1) s'écrit :

$$Z_{Ed} = K * R_{Nd}^{\alpha};$$

$$Z_{Eg} = K * R_{Ng}^{\alpha};$$

Avec

$$K = (P_E - Z_B) / (P_U + Z_B)$$

dans lequel

- $Z_{Ed}$ est la composante verticale de la résultante des forces d'équilibrage appliquées à l'exosquelette et mesurée sous le pied droit de l'exosquelette ;
- $Z_{Eg}$ est la composante verticale de la résultante des forces d'équilibrage appliquées à l'exosquelette et mesurée sous le pied gauche de l'exosquelette ;
- $R_{Nd}^{\alpha}$ est la composante normale de la force d'appui mesurée sous le pied droit de l'utilisateur, projetée sur la verticale pour tenir compte de l'inclinaison du pied grâce à un modèle d'équilibre et à la mesure de l'inclinaison du pied ;
- $R_{Ng}^{\alpha}$ est la composante normale de la force d'appui mesurée sous le pied gauche de l'utilisateur, projetée sur la verticale tenir compte de l'inclinaison du pied;
- $P_E$ est le poids de l'exosquelette (1);
- $P_U$ est le poids de l'utilisateur (100);
- $Z_B$ est un défaut d'assistance prédéfini correspondant à un effort constant appliqué par l'exosquelette (1) sur l'utilisateur (100).

9. Procédé selon l'une quelconque des revendications précédentes, comprenant une étape supplémentaire de commander les actionneurs (40, 41, 42, 43) de façon à ce que l'intensité de la composante verticale ($Z_{Ed}$, $Z_{Eg}$) de la résultante des forces d'équilibrage ($R_{Eg}$, $R_{Ed}$) appliquées à l'exosquelette (1) et exercée sur au moins un pied (23, 33) de l'exosquelette (1) soit égale à une valeur saturée lorsque l'intensité de la composante verticale ($R_{Ng}$, $R_{Nd}$) de la force d'appui ($R_d$, $R_g$) mesurée sous le pied (123, 133) correspondant de l'utilisateur (1) dépasse une valeur de seuil supérieur prédéfinie.

**10.** Procédé selon la revendication 9, dans lequel la valeur saturée est égale au poids de l'exosquelette (1) et/ou la valeur de seuil supérieure est comprise entre 0.5 décanewtons et 10 décanewtons.

**11.** Procédé selon la revendication 9, dans lequel la valeur saturée est égale au poids de l'exosquelette (1) augmenté du produit de sa masse ($m_E$) par l'accélération verticale de son centre de gravité (60) et/ou la valeur de seuil supérieure est comprise entre 0.5 décanewtons et 10 décanewtons.

**12.** Exosquelette (1) comprenant un élément de bassin (10) sur lequel sont articulés deux membres inférieurs (20, 30) s'étendant sensiblement parallèlement aux membres inférieurs (120, 130) de l'utilisateur (1), chaque membre inférieur (20, 30) de l'exosquelette (1) comportant un segment de cuisse (21, 31) articulé à un segment de jambe (22, 32) lui-même articulé à un pied (23, 33), chaque pied (23, 33) de l'exosquelette (1) étant lié à un pied (123, 133) correspondant de l'utilisateur (100) et comprenant une interface 24, 34) sur laquelle repose le pied (123, 133) de l'utilisateur (100), l'exosquelette (1) étant pourvu d'actionneurs (40, 41, 42, 43) commandant les articulations (26, 27, 36, 37) liant les membres inférieurs (20, 30) à l'élément de bassin (10) et les segments de cuisse (21, 31) aux segments de jambe (22, 32), l'articulation (28, 38) du pied (23, 33) sur le segment de jambe (22, 32) demeurant libre, l'exosquelette (1) comprenant également des moyens de mesure (25, 35) de la composante normale ($R_{Ng}$, $R_{Nd}$) à un plan d'appui (P) du pied (123, 133) d'une force d'appui (Rd, Rg) sous chaque pied (123, 133) de l'utilisateur (1) et une unité de traitement (50) reliée aux moyens de mesure (25, 35) ainsi qu'aux actionneurs (40, 41, 42, 43) et agencée pour mettre en œuvre le procédé selon l'une quelconque des revendications précédentes.

**13.** Exosquelette (1) selon la revendication 12, dans lequel les segments de cuisse (21, 31) et de jambe (22, 32) sont libres par rapport à l'utilisateur (100).

**Patentansprüche**

**1.** Verfahren zum Steuern eines gehfähigen Exoskeletts (1), das mit einem Benutzer (100) verbunden ist, wobei das Exoskelett (1) ein Beckenelement (10) umfasst, an dem zwei untere Gliedmaßen (20, 30) angelenkt sind, die sich im Wesentlichen parallel zu den unteren Gliedmaßen (120, 130) des Benutzers (1) erstrecken, wobei jede untere Gliedmaße (20, 30) des Exoskeletts (1) ein Oberschenkelsegment (21, 31) umfasst, das an einem Unterschenkelsegment (22, 32) angelenkt ist, das selbst an einem Fuß (23, 33) angelenkt ist, wobei das Exoskelett (1) mit Aktoren (40, 41, 42, 43) versehen ist, die die Drehung und/oder das auf die Gelenkverbindungen (26, 27, 36, 37), die die unteren Gliedmaßen (20, 30) mit dem Beckenelement (10) verbinden, und auf die Gelenkverbindungen, die die Oberschenkelsegmente (21, 31) mit den Unterschenkelsegmenten (22, 32) verbinden, aufzubringende Drehmoment steuern, wobei jeder Fuß (23, 33) des Exoskeletts (1) mit einem entsprechenden Fuß (123, 133) des Benutzers (100) verbunden ist und eine Schnittstelle (24, 34) umfasst, auf der ein Fuß (123, 133) des Benutzers (100) ruht, wobei das Exoskelett (1) ferner Messmittel (25, 35) zum Messen der zu einer Auflagefläche (P) des Fußes (123, 133) normalen Komponente ($R_{Ng}$, $R_{Nd}$) einer Auflagekraft ($R_d$, $R_g$) unter jedem Fuß (123, 133) des Benutzers (1) umfasst, wobei das Steuerverfahren **dadurch gekennzeichnet ist, dass** es die folgenden Schritte umfasst:

- alleiniges Messen der zu einer Auflagefläche (P) des Fußes (123, 133) normalen Komponente ($R_{Ng}$, $R_{Nd}$) der Auflagekraft ($R_d$, $R_g$) an einem ersten Punkt unter jedem Fuß (123, 133) des Benutzers (1);
- Berechnen eines Zielwerts für die Intensität einer vertikalen Komponente ($Z_{Ed}$, $Z_{Eg}$) der Resultierenden der Ausgleichskräfte ($R_{Eg}$, $R_{Ed}$), die auf das Exoskelett (1) aufgebracht werden, wobei die Resultierende der Ausgleichskräfte an einem zweiten Punkt jedes Fußes (23, 33) des Exoskeletts (1) ausgeübt wird, wobei der Zielwert der vertikalen Komponente ($Z_{Ed}$, $Z_{Eg}$) der Resultierenden der Ausgleichskräfte ($R_{Eg}$, $R_{Ed}$), die auf das Exoskelett (1) aufgebracht werden, eine Funktion der Intensität der normalen Komponente ($R_{Ng}$, $R_{Nd}$) der Auflagekraft ($R_d$, $R_g$) ist, die unter dem entsprechenden Fuß (123, 133) des Benutzers (1) gemessen wird;
- Eingeben des für die Intensität einer vertikalen Komponente ($Z_{Ed}$, $Z_{Eg}$) der Resultierenden der Ausgleichskräfte ($R_{Eg}$, $R_{Ed}$), die auf das Exoskelett (1) aufgebracht werden, berechneten Zielwertes sowie des Wertes der zu einer Auflagefläche (P) des Fußes (123, 133) normalen Komponente ($R_{Ng}$, $R_{Nd}$) der Auflagekraft ($R_d$, $R_g$), die unter jedem Fuß (123, 133) des Benutzers (1) gemessen wird, in ein Modell der Einheit aus Benutzer (100) + Exoskelett (1);

- Ausführen des Modells der Einheit aus Benutzer (100) + Exoskelett (1), um an die Aktoren (40, 41, 42, 43) zu richtende Steuersollwerte zu bestimmen;
- Steuern der Aktoren (40, 41, 42, 43) gemäß den bestimmten Steuersollwerten.

2. Verfahren nach Anspruch 1, bei dem der Zielwert für die Intensität der vertikalen Komponente ($Z_{Ed}$, $Z_{Eg}$) der Resultierenden der Ausgleichskräfte ($R_{Eg}$, $R_{Ed}$), die auf das Exoskelett (1) aufgebracht werden, und die auf jeden Fuß (23, 33) des Exoskeletts (1) ausgeübt wird, geschrieben wird:

$$Z_{Ed} = \alpha_d * (P_E\text{-}Z_B) + b;$$

$$Z_{Eg} = \alpha_g * (P_E\text{-}Z_B) + b';$$

mit

$$\alpha_d = R_{Nd}/ (R_{Nd}+R_{Ng});$$

$$\alpha_g = R_{Ng}/ (R_{Nd}+R_{Ng});$$

wobei

- $Z_{Ed}$ die vertikale Komponente der Resultierenden der Ausgleichskräfte ist, die auf den rechten Fuß des Exoskeletts (1) aufgebracht werden;
- $Z_{Eg}$ die vertikale Komponente der Resultierenden der Ausgleichskräfte ist, die auf den linken Fuß des Exoskeletts (1) aufgebracht werden;
- $R_{Nd}$ die normale Komponente der Auflagekraft ist, die unter dem rechten Fuß (33) des Benutzers (100) gemessen wird;
- $R_{Ng}$ die normale Komponente der Auflagekraft ist, die unter dem linken Fuß (23) des Benutzers (100) gemessen wird;
- $P_E$ das Gewicht des Exoskeletts (1) ist;
- $Z_B$ ein vordefinierter Hilfsstandardwert ist, der einer konstanten Kraft entspricht, die durch das Exoskelett (1) auf den Benutzer (100) aufgebracht wird;
- b und b' unabhängige Komponenten der Auflagekräfte sind, die unter den Füßen (23, 33) des Benutzers (100) gemessen werden.

3. Verfahren nach Anspruch 1, bei dem die Intensität der vertikalen Komponente ($Z_{Ed}$, $Z_{Eg}$) der Resultierenden der Ausgleichskräfte ($R_{Eg}$, $R_{Ed}$), die auf das Exoskelett (1) aufgebracht werden, und die auf jeden Fuß (23, 33) des Exoskeletts (1) ausgeübt wird, geschrieben wird:

$$Z_{Ed} = \alpha_d * (P_E\text{-}Z_B) + b;$$

$$Z_{Eg} = \alpha_g * (P_E\text{-}Z_B) + b';$$

mit

$$\alpha_d = R_{Nd}^{\alpha}/ (R_{Nd}^{\alpha} +R_{Ng}^{\alpha});$$

$$\alpha_g = R_{Ng}^{\alpha}/ (R_{Nd}^{\alpha} +R_{Ng}^{\alpha});$$

wobei

- $Z_{Ed}$ die vertikale Komponente der Resultierenden der Ausgleichskräfte ist, die auf den rechten Fuß des Exoskeletts (1) aufgebracht werden;
- $Z_{Eg}$ die vertikale Komponente der Resultierenden der Ausgleichskräfte ist, die auf den linken Fuß des Exoskeletts (1) aufgebracht werden;
- $R_{Nd}{}^\alpha$ die normale Komponente der Auflagekraft ist, die unter dem rechten Fuß des Benutzers gemessen wird, projiziert auf die Vertikale, um die Neigung des Fußes dank eines Gleichgewichtsmodells und der Messung der Neigung des Fußes zu berücksichtigen;
- $R_{Ng}{}^\alpha$ die normale Komponente der Auflagekraft ist, die unter dem linken Fuß (23) des Benutzers (100) gemessen wird, projiziert auf die Vertikale,

um die Neigung des Fußes zu berücksichtigen;

- $P_E$ das Gewicht des Exoskeletts (1) ist;
- $Z_B$ ein vordefinierter Hilfsstandardwert ist, der einer konstanten Kraft entspricht, die durch das Exoskelett (1) auf den Benutzer (100) aufgebracht wird;
- b und b' unabhängige Komponenten der Auflagekräfte sind, die unter den Füßen (23, 33) des Benutzers (100) gemessen werden.

4. Verfahren nach Anspruch 1, bei dem die Intensität der vertikalen Komponente ($Z_{Ed}$, $Z_{Eg}$) der Resultierenden der Ausgleichskräfte ($R_{Eg}$, $R_{Ed}$), die auf das Exoskelett (2) aufgebracht werden, und die auf jeden Fuß (23, 33) des Exoskeletts (1) ausgeübt wird, geschrieben wird:

$$Z_{Ed} = \alpha_d * (P_E + m_E * d^2/dt^2(z_{GE}) - Z_B) + b;$$

$$Z_{Eg} = \alpha_g * (P_E + m_E * d^2/dt^2(z_{GE}) - Z_B) + b';$$

mit

$$\alpha_d = R_{Nd}{}^\alpha / (R_{Nd}{}^\alpha + R_{Ng}{}^\alpha);$$

$$\alpha_g = R_{Ng}{}^\alpha / (R_{Nd}{}^\alpha + R_{Ng}{}^\alpha);$$

wobei

- $Z_{Ed}$ die vertikale Komponente der Resultierenden der Ausgleichskräfte ist, die auf den rechten Fuß des Exoskeletts (1) aufgebracht werden;
- $Z_{Eg}$ die vertikale Komponente der Resultierenden der Ausgleichskräfte ist, die auf den linken Fuß des Exoskeletts (1) aufgebracht werden;
- $R_{Nd}{}^\alpha$ die normale Komponente der Auflagekraft ist, die unter dem rechten Fuß des Benutzers gemessen wird, projiziert auf die Vertikale, um die Neigung des Fußes dank eines Gleichgewichtsmodells und der Messung der Neigung des Fußes zu berücksichtigen;
- $R_{Ng}{}^\alpha$ die normale Komponente der Auflagekraft ist, die unter dem linken Fuß (23) des Benutzers (100) gemessen wird, projiziert auf die Vertikale,

um die Neigung des Fußes zu berücksichtigen;

- $P_E$ das Gewicht des Exoskeletts (1) ist;
- $m_E * d^2/dt^2(z_{GE})$ das Produkt aus der Masse des Exoskeletts und der Beschleunigung seines Schwerpunktes G () ist;
- $Z_B$ ein vordefinierter Hilfsstandardwert ist, der einer konstanten Kraft entspricht, die durch das Exoskelett (1) auf den Benutzer (100) aufgebracht wird;
- b und b' unabhängige Komponenten der Auflagekräfte sind, die unter den Füßen (23, 33) des Benutzers (100) gemessen werden.

**5.** Verfahren nach einem der Ansprüche 2 bis 4, bei dem die Komponenten b und b' die folgenden diskreten Werte annehmen:

- b ist eine Nicht-Null-Konstante, wenn die Intensität der normalen Komponente ($R_{Ng}$) der Auflagekraft, die unter dem linken Fuß des Benutzers gemessen wird, größer als ein vordefinierter unterer Schwellenwert ist;
- b ist null, wenn die Intensität der normalen Komponente ($R_{Ng}$) der Auflagekraft, die unter dem linken Fuß des Benutzers gemessen wird, kleiner als ein vordefinierter unterer Schwellenwert ist;
- b' ist eine Nicht-Null-Konstante, wenn die Intensität der normalen Komponente ($R_{Nd}$) der Auflagekraft, die unter dem rechten Fuß des Benutzers gemessen wird, größer als ein vordefinierter unterer Schwellenwert ist;
- b' ist null, wenn die normale Komponente ($R_{Nd}$) der Auflagekraft, die unter dem rechten Fuß des Benutzers gemessenen wird, kleiner als ein vordefinierter unterer Schwellenwert ist.

**6.** Verfahren nach Anspruch 1, bei dem der untere Schwellenwert zwischen 0,5 Dekanewton und 10 Dekanewton beträgt.

**7.** Verfahren nach Anspruch 1, bei dem der Zielwert für die Intensität der vertikalen Komponente ($Z_{Ed}$, $Z_{Eg}$) der Resultierenden der Ausgleichskräfte ($R_{Eg}$, $R_{Ed}$), die auf das Exoskelett (1) aufgebracht werden, und die auf jeden Fuß (23, 33) des Exoskeletts (1) ausgeübt wird, beschrieben wird:

$$Z_{Ed} = K * R_{Nd};$$

$$Z_{Eg} = K * R_{Ng}$$

mit

$$K = (P_E - Z_B) / (P_U + Z_B)$$

wobei

- $Z_{Ed}$ die vertikale Komponente der Resultierenden der Ausgleichskräfte ist, die auf Exoskelett (1) aufgebracht werden, und die unter dem rechten Fuß des Exoskeletts gemessen wird;
- $Z_{Eg}$ die vertikale Komponente der Resultierenden der Ausgleichskräfte ist, die auf das Exoskelett (1) aufgebracht werden, und die unter dem linken Fuß des Exoskeletts gemessen wird;
- $R_{Nd}$ die normale Komponente der Auflagekraft ist, die unter dem rechten Fuß des Benutzers gemessen wird;
- $R_{Ng}$ die normale Komponente der Auflagekraft ist, die unter dem linken Fuß des Benutzers gemessen wird;
- $P_E$ das Gewicht des Exoskeletts (1) ist;
- $P_U$ das Gewicht des Benutzers ist;
- $Z_B$ ein vordefinierter Hilfsstandardwert ist, der einer konstanten Kraft entspricht, die durch das Exoskelett (1) auf den Benutzer (100) aufgebracht wird.

**8.** Verfahren nach Anspruch 1, bei dem der Zielwert für die Intensität der vertikalen Komponente ($Z_{Ed}$, $Z_{Eg}$) der Resultierenden der Ausgleichskräfte ($R_{Eg}$, $R_{Ed}$), die auf das Exoskelett (1) aufgebracht werden, und die auf jeden Fuß (32, 33) des Exoskeletts (1) ausgeübt wird, geschrieben wird:

$$Z_{Ed} = K * R_{Nd}^{\alpha};$$

$$Z_{Eg} = K * R_{Ng}^{\alpha};$$

mit

$$K = (P_E - Z_B) / (P_U + Z_B)$$

wobei

- $Z_{Ed}$ die vertikale Komponente der Resultierenden der Ausgleichskräfte ist, die auf das Exoskelett (1) aufgebracht werden, und die unter dem rechten Fuß des Exoskeletts gemessen wird;
- $Z_{Eg}$ die vertikale Komponente der Resultierenden der Ausgleichskräfte ist, die auf das Exoskelett (1) aufgebracht werden, und die unter dem linken Fuß des Exoskeletts gemessen wird;
- $R_{Nd}\alpha$ die normale Komponente der Auflagekraft ist, die unter dem rechten Fuß des Benutzers gemessen wird, projiziert auf die Vertikale, um die Neigung des Fußes dank eines Gleichgewichtsmodells und der Messung der Neigung des Fußes zu berücksichtigen;
- $R_{Ng}\alpha$ die normale Komponente der Auflagekraft ist, die unter dem linken Fuß (23) des Benutzers (100) gemessen wird, projiziert auf die Vertikale,

um die Neigung des Fußes zu berücksichtigen;

- $P_E$ das Gewicht des Exoskeletts (1) ist;
- $P_U$ das Gewicht des Benutzers (100) ist;
- $Z_B$ ein vordefinierter Hilfsstandardwert ist, der einer konstanten Kraft entspricht, die durch das Exoskelett (1) auf den Benutzer (100) aufgebracht wird.

9. Verfahren nach einem der vorhergehenden Ansprüche, umfassend einen zusätzlichen Schritt des Steuerns der Aktoren (40, 41, 42, 43) derart, dass die Intensität der vertikalen Komponente ($Z_{Ed}$, $Z_{Eg}$) der Resultierenden der Ausgleichskräfte ($R_{Eg}$, $R_{Ed}$), die auf das Exoskelett (1) aufgebracht werden, und die auf mindestens einen Fuß (23, 33) des Exoskeletts (1) ausgeübt wird, gleich einem Sättigungswert ist, wenn die Intensität der vertikalen Komponente ($R_{Ng}$, $R_{Nd}$) der Auflagekraft ($R_d$, $R_g$), die unter dem entsprechenden Fuß (123, 133) des Benutzers (1) gemessen wird, einen vordefinierten oberen Schwellenwert überschreitet.

10. Verfahren nach Anspruch 9, bei dem der Sättigungswert gleich dem Gewicht des Exoskeletts (1) ist und/oder der obere Schwellenwert zwischen 0,5 Dekanewton und 10 Dekanewton beträgt.

11. Verfahren nach Anspruch 9, bei dem der Sättigungswert gleich dem Gewicht des Exoskeletts (1) ist, plus dem Produkt aus seiner Masse ($m_E$) und der vertikalen Beschleunigung seines Schwerpunkts (60) und/oder der obere Schwellenwert zwischen 0,5 Dekanewton und 10 Dekanewton beträgt.

12. Exoskelett (1), umfassend ein Beckenelement (10), an dem zwei untere Gliedmaßen (20, 30) angelenkt sind, die sich im Wesentlichen parallel zu den unteren Gliedmaßen (120, 130) des Benutzers (1) erstrecken, wobei jede untere Gliedmaße (20, 30) des Exoskeletts (1) ein Oberschenkelsegment (21, 31) umfasst, das an einem Unterschenkelsegment (22, 32) angelenkt ist, das selbst an einem Fuß (23, 33) angelenkt ist, wobei jeder Fuß (23, 33) des Exoskeletts (1) mit einem entsprechenden Fuß (123, 133) des Benutzers (100) verbunden ist und eine Schnittstelle (24, 34) umfasst, auf der der Fuß (123, 133) des Benutzers (100) ruht, wobei das Exoskelett (1) mit Aktoren (40, 41, 42, 43) versehen ist, die die Gelenkverbindungen (26, 27, 36, 37), die die unteren Gliedmaßen (20, 30) mit dem Beckenelement (10) und die Oberschenkelsegmente (21, 31) mit den Unterschenkelsegmenten (22, 32) verbinden, steuern, wobei die Gelenkverbindung (28, 38) des Fußes (23, 33) an dem Unterschenkelsegment (22, 32) frei bleibt, wobei das Exoskelett (1) ferner Messmittel (25, 35) zum Messen der zu einer Auflageebene (P) des Fußes (123, 133) normalen Komponente ($R_{Ng}$, $R_{Nd}$) einer Auflagekraft ($R_d$, $R_g$) unter jedem Fuß (123, 133) des Benutzers (1) und eine Verarbeitungseinheit (50) umfasst, die mit den Messmitteln (25, 35) sowie mit den Aktoren (40, 41, 42, 43) verbunden und ausgebildet ist, um das Verfahren nach einem der vorhergehenden Ansprüche durchzuführen.

13. Exoskelett (1) nach Anspruch 12, bei dem die Oberschenkelsegmente (21, 31) und Unterschenkelsegmente (22, 32) in Bezug auf den Benutzer (100) frei sind.

## Claims

1. A method for controlling an ambulatory exoskeleton (1) linked to a user (100), the exoskeleton (1) comprising a pelvis element (10) on which are articulated two lower limbs (20, 30) extending substantially parallel to the lower limbs (120, 130) of the user (100), each lower limb (20, 30) of the exoskeleton (1) having a thigh segment (21, 31) articulated to a leg segment (22, 32), which is itself articulated to a foot (23, 33), the exoskeleton (1) being provided with actuators (40, 41, 42, 43) controlling the rotation and/or the torque to be applied to the joints (26, 27, 36, 37) connecting the lower limbs (20, 30) to the pelvis element (10) and to the joints connecting the thigh segments (21, 31) to the leg segments (22, 32), each foot (23, 33) of the exoskeleton (1) being connected to a corresponding foot (123, 133) of the user (100) and comprising an interface (24, 34) on which a foot (123, 133) of the user (100) rests, the exoskeleton (1) likewise comprising measurement means (25, 35) for measuring the normal component ($R_{Ng}$, $R_{Nd}$), with respect to a bearing plane (P) of the foot (123, 133), of a bearing force ($R_d$, $R_g$) under each foot (123, 133) of the user (100), the control method being **characterized in that** it comprises the following steps:

- measuring only the normal component ($R_{Ng}$, $R_{Nd}$), with respect to a bearing plane (P) of the foot (123, 133), of the bearing force ($R_d$, $R_g$) at a first point under each foot (123, 133) of the user (100);
- calculating a target value for the intensity of a vertical component ($Z_{Ed}$, $Z_{Eg}$) of the resultant of the balancing forces ($R_{Eg}$, $R_{Ed}$) applied to the exoskeleton (1), the resultant of the balancing forces being exerted at a second point of each foot (123, 133) of the exoskeleton (1), the target value of the vertical component ($Z_{Ed}$, $Z_{Eg}$) of the resultant of the balancing forces ($R_{Eg}$, $R_{Ed}$) applied to the exoskeleton (1) being a function of the intensity of the normal component ($R_{Ng}$, $R_{Nd}$) of the bearing force ($R_d$, $R_g$) measured under the corresponding foot (123, 133) of the user (1) ;
- inputting the target value calculated for the intensity of a vertical component ($Z_{Ed}$, $Z_{Eg}$) of the resultant of the balancing forces ($R_{Eg}$, $R_{Ed}$) applied to the exoskeleton (1), and also the value of the normal component ($R_{Ng}$, $R_{Nd}$), with respect to a bearing plane (P) of the foot (123, 133), of the bearing force ($R_d$, $R_g$) measured under each foot (123, 133) of the user (100), into a model of the assembly user (100) + exoskeleton (1);
- executing the model of the assembly user (100) + exoskeleton (1) in order to determine control setpoints to send to the actuators (40, 41, 42, 43);
- controlling the actuators (40, 41, 42, 43) according to the determined control setpoints.

2. The method as claimed in claim 1, in which the target value for the intensity of the vertical component ($Z_{Ed}$, $Z_{Eg}$) of the resultant of the balancing forces ($R_{Eg}$, $R_{Ed}$) applied to the exoskeleton (1) and exerted on each foot (23,33) of the exoskeleton (1) is written:

$$Z_{Ed} = \alpha_d * (P_E - Z_B) + b;$$

$$Z_{Eg} = \alpha_g * (P_E - Z_B) + b';$$

with

$$\alpha_d = R_{Nd} / (R_{Nd} + R_{Ng});$$

$$\alpha_g = R_{Ng} / (R_{Nd} + R_{Ng});$$

in which

- $Z_{Ed}$ is the vertical component of the resultant of the balancing forces applied to the right foot of the exoskeleton (1) ;
- $Z_{Eg}$ is the vertical component of the resultant of the balancing forces applied to the left foot of the exoskeleton (1);
- $R_{Nd}$ is the normal component of the bearing force measured under the right foot (133) of the user (100);
- $R_{Ng}$ is the normal component of the bearing force measured under the left foot (123) of the user (100);
- $P_E$ is the weight of the exoskeleton (1);
- $Z_B$ is a predefined default assistance corresponding to a constant force applied by the exoskeleton (1) to the user (100);
- b and b' are components independent of the bearing forces measured under the feet (23, 33) of the user (100).

3. The method as claimed in claim 1, in which the intensity of the vertical component ($Z_{Ed}$, $Z_{Eg}$) of the resultant of the balancing forces ($R_{Eg}$, $R_{Ed}$) applied to the exoskeleton (1) and exerted on each foot (23, 33) of the exoskeleton (1) is written:

$$Z_{Ed} = \alpha_d * (P_E - Z_B) + b;$$

$$Z_{Eg} = \alpha_g * (P_E - Z_B) + b';$$

with

$$\alpha_d = R_{Nd}{}^\alpha / (R_{Nd}{}^\alpha + R_{Ng}{}^\alpha);$$

$$\alpha_g = R_{Ng}{}^\alpha / (R_{Nd}{}^\alpha + R_{Ng}{}^\alpha);$$

in which

- $Z_{Ed}$ is the vertical component of the resultant of the balancing forces applied to the right foot of the exoskeleton (1);
- $Z_{Eg}$ is the vertical component of the resultant of the balancing forces applied to the left foot of the exoskeleton (1);
- $R_{Nd}{}^\alpha$ is the normal component of the bearing force measured under the right foot of the user, projected onto the vertical in order to take into account the inclination of the foot by virtue of an equilibrium model and of the measurement of the inclination of the foot;
- $R_{Ng}{}^\alpha$ is the normal component of the bearing force measured under the left foot of the user projected onto the vertical in order to take into account the inclination of the foot;
- $P_E$ is the weight of the exoskeleton (1);
- $Z_B$ is a predefined default assistance corresponding to a constant force applied by the exoskeleton (1) to the user (100);
- b and b' are components independent of the bearing forces measured under the feet (123, 133) of the user (100).

**4.** The method as claimed in claim 1, in which the intensity of the vertical component ($Z_{Ed}$, $Z_{Eg}$) of the resultant of the balancing forces ($R_{Eg}$, $R_{Ed}$) applied to the exoskeleton (1) and exerted on each foot (23, 33) of the exoskeleton (1) is written:

$$Z_{Ed} = \alpha_d * (P_E + m_E * d^2/dt^2 (z_{GE}) - Z_B) + b;$$

$$Z_{Eg} = \alpha_g * (P_E + m_E * d^2/dt^2 (z_{GE}) - Z_B) + b';$$

with

$$\alpha_d = R_{Nd}{}^\alpha / (R_{Nd}{}^\alpha + R_{Ng}{}^\alpha);$$

$$\alpha_g = R_{Ng}{}^\alpha / (R_{Nd}{}^\alpha + R_{Ng}{}^\alpha);$$

in which

- $Z_{Ed}$ is the vertical component of the resultant of the balancing forces applied to the right foot of the exoskeleton (1);
- $Z_{Eg}$ is the vertical component of the resultant of the balancing forces applied to the left foot of the exoskeleton (1);
- $R_{Nd}{}^\alpha$ is the normal component of the bearing force measured under the right foot of the user, projected onto the vertical in order to take into account the inclination of the foot by virtue of an equilibrium model and of the measurement of the inclination of the foot;
- $R_{Ng}{}^\alpha$ is the normal component of the bearing force measured under the left foot of the user, projected onto the vertical in order to take into account the inclination of the foot;
- $P_E$ is the weight of the exoskeleton (1);

- $m_E * d^2/dt^2 (z_{GE})$ is the product of the mass of the exoskeleton by the acceleration of its center of gravity (G),
- $Z_B$ is a predefined default assistance corresponding to a constant force applied by the exoskeleton (1) to the user (100);
- b and b' are components independent of the bearing forces measured under the feet (123, 133) of the user (100).

5. The method as claimed in one of claims 2 through 4, in which the components b and b' adopt the following discrete values:

    - b is a non-zero constant if the intensity of the normal component of the bearing force measured under the left foot of the user ($R_{Ng}$) is greater than a predefined lower threshold value;
    - b is zero if the intensity of the normal component of the bearing force measured under the left foot of the user ($R_{Ng}$) is less than a predefined lower threshold value;
    - b' is a non-zero constant if the intensity of the normal component of the bearing force measured under the right foot of the user ($R_{Nd}$) is greater than a predefined lower threshold value;
    - b' is zero if the normal component of the bearing force measured under the right foot of the user ($R_{Nd}$) is less than a predefined lower threshold value.

6. The method as claimed in claim 1, in which the lower threshold value is between 0.5 decanewtons and 10 decanewtons.

7. The method as claimed in claim 1, in which the target value for the intensity of the vertical component ($Z_{Ed}$, $Z_{Eg}$) of the resultant of the balancing forces ($R_{Eg}$, $R_{Ed}$) applied to the exoskeleton (1) and exerted on each foot (123, 133) of the exoskeleton (1) is written:

$$Z_{Ed} = K * R_{Nd};$$

$$Z_{Eg} = K * R_{Ng};$$

with

$$K = (P_E - Z_B) / (P_U + Z_B)$$

in which

    - $Z_{Ed}$ is the vertical component of the resultant of the balancing forces applied to the exoskeleton and measured under the right foot of the exoskeleton;
    - $Z_{Eg}$ is the vertical component of the resultant of the balancing forces applied to the exoskeleton and measured under the left foot of the exoskeleton;
    - $R_{Nd}$ is the normal component of the bearing force measured under the right foot of the user;
    - $R_{Ng}$ is the normal component of the bearing force measured under the left foot of the user;
    - $P_E$ is the weight of the exoskeleton (1);
    - $P_U$ is the weight of the user;
    - $Z_B$ is a predefined default assistance corresponding to a constant force applied by the exoskeleton (1) to the user (100).

8. The method as claimed in claim 1, in which the target value for the intensity of the vertical component ($Z_{Ed}$, $Z_{Eg}$) of the resultant of the balancing forces ($R_{Eg}$, $R_{Ed}$) applied to the exoskeleton (1) and exerted on each foot (23, 33) of the exoskeleton (1) is written:

$$Z_{Ed} = K * R_{Nd}^{\alpha};$$

$$Z_{Eg} = K * R_{Ng}^{\alpha};$$

with

$$K = (P_E - Z_B) / (P_U + Z_B)$$

in which

- $Z_{Ed}$ is the vertical component of the resultant of the balancing forces applied to the exoskeleton and measured under the right foot of the exoskeleton;
- $Z_{Eg}$ is the vertical component of the resultant of the balancing forces applied to the exoskeleton and measured under the left foot of the exoskeleton;
- $R_{Nd}{}^{\alpha}$ is the normal component of the bearing force measured under the right foot of the user, projected onto the vertical in order to take into account the inclination of the foot by virtue of an equilibrium model and of the measurement of the inclination of the foot;
- $R_{Ng}{}^{\alpha}$ is the normal component of the bearing force measured under the left foot of the user, projected onto the vertical in order to take into account the inclination of the foot;
- $P_E$ is the weight of the exoskeleton (1);
- $P_U$ is the weight of the user (100);
- $Z_B$ is a predefined default assistance corresponding to a constant force applied by the exoskeleton (1) to the user (100).

9. The method as claimed in any one of the preceding claims, comprising a supplementary step of controlling the actuators (40, 41, 42, 43) in such a way that the intensity of the vertical component ($Z_{Ed}$, $Z_{Eg}$) of the resultant of the balancing forces ($R_{Eg}$, $R_{Ed}$) applied to the exoskeleton (1) and exerted on at least one foot (123, 133) of the exoskeleton (1) is equal to a saturated value when the intensity of the vertical component ($R_{Ng}$, $R_{Nd}$) of the bearing force ($R_d$, $R_g$) measured under the corresponding foot (123, 133) of the user (1) exceeds a predefined upper threshold value.

10. The method as claimed in claim 9, in which the saturated value is equal to the weight of the exoskeleton (1) and/or the upper threshold value is between 0.5 decanewtons and 10 decanewtons.

11. The method as claimed in claim 9, in which the saturated value is equal to the weight of the exoskeleton (1) augmented by the product of its mass ($m_E$) by the vertical acceleration of its center of gravity (60) and/or the upper threshold value is between 0.5 decanewtons and 10 decanewtons.

12. An exoskeleton (1) comprising a pelvis element (10) on which are articulated two lower limbs (20, 30) extending substantially parallel to the lower limbs (120, 130) of the user (1), each lower limb (20, 30) of the exoskeleton (1) having a thigh segment (21, 31) articulated to a leg segment (22, 32), which is itself articulated to a foot (23, 33), each foot (123, 133) of the exoskeleton (1) being connected to a corresponding foot (123, 133) of the user (100) and comprising an interface (24, 34) on which the foot (123, 133) of the user (100) rests, the exoskeleton (1) being provided with actuators (40, 41, 42, 43) controlling the joints (26, 27, 36, 37) connecting the lower limbs (20, 30) to the pelvis element (10) and the thigh segments (21, 31) to the leg segments (22, 32), the joint (28, 38) articulating the foot (23, 33) to the leg segment (22, 32) remaining free, the exoskeleton (1) likewise comprising measurement means (25, 35) for measuring the normal component ($R_{Ng}$, $R_{Nd}$), with respect to a bearing plane (P) of the foot (123, 133), of a bearing force ($R_d$, $R_g$) under each foot (123, 133) of the user (1), and a processing unit (50) connected to the measurement means (25, 35) and to the actuators (40, 41, 42, 43) and arranged to implement the method as claimed in any one of the preceding claims.

13. The exoskeleton (1) as claimed in claim 9, in which the thigh segments (21, 31) and leg segments (22, 32) are free with respect to the user (100).

Fig. 1

Fig. 2

Fig. 3

## RÉFÉRENCES CITÉES DANS LA DESCRIPTION

**Documents brevets cités dans la description**

- US 20090210093 A1

**Littérature non-brevet citée dans la description**

- *Mechatronics,* 2014, vol. 24, 168-176
- *40th Southeastern Symposium on System Theory University of New Orleans,* 16 Mars 2008
- *Advanced Robotics,* 2006, vol. 20 (9), 989-1014